# EUROPÄISCHE PATENTSCHRIFT

(11) **EP 2 090 897 B1**
(45) Veröffentlichungstag und Bekanntmachung des Hinweises auf die Patenterteilung: **20.07.2011**
(21) Anmeldenummer: 08105770.5
(22) Anmeldetag: 11.11.2008
(51) Int. Cl.: G01S 7/52, G01S 15/93, H04L 29/12, G01S 15/87

(54) **Adressierung von Sende- und Empfangseinheiten einer Ultraschallabstandsmesseinrichtung**
Allocation of addresses to transmit- and receive units of an ultrasonic sensor system
Attribution des adresses aux unités de transmission et réception d'un système à ultrasons

(30) Priorität: 18.02.2008 DE 102008009651
(43) Veröffentlichungstag der Anmeldung: 19.08.2009
(73) Patentinhaber: ROBERT BOSCH GMBH, 70442 Stuttgart (DE)
(72) Erfinder: Seiter, Michael, 71735 Eberdingen-Hochdorf (DE); Klotz, Albrecht, 72631 Aichtal (DE); Treptow, Thomas, 71229 Leonberg (DE); Hering, Michael, 71229 Leonberg (DE); Schmid, Dirk, 75397 Simmozheim (DE); Gerlach, Michael, 71263 Weil Der Stadt (DE); Schenke, Peter, 71229 Leonberg (DE); Rapps, Peter, 76227 Karlsruhe (DE); Herder, Bjoern, 70469 Stuttgart (DE); Schneider, Marcus, 71642 Ludwigsburg (DE)

(56) Entgegenhaltungen:
- EP-A- 0 980 165
- EP-A- 1 058 126
- EP-A- 1 455 278
- DE-A1- 4 338 743
- DE-A1-102005 054 390
- DE-A1-102005 055 964
- DE-B4- 10 164 760

## Beschreibung

Die Erfindung betrifft ein Fahrerassistenzsystem eines Fahrzeugs mit den im Oberbegriff des Anspruchs 1 genannten Merkmalen einerseits und ein zugehöriges Verfahren zum Betrieb eines Fahrerassistenzsystem eines Fahrzeugs mit den im Oberbegriff des Anspruchs 6 genannten Merkmalen andererseits.

### Stand der Technik

Eine System und ein Verfahren der eingangs genannten Art sind aus der Offenlegungsschrift DE 10138 001 A1 bekannt. Darin ist eine Echosignalüberwachungsvorrichtung mit einer Mehrzahl von Sende- und Empfangseinheiten beschrieben, die zum Aussenden eines Signals und Empfangen eines von einem externen Gegenstand zurückgeworfenen Echos dienen. Eine Auswertungseinheit ist dabei zum Abschätzen der Entfernung von der Überwachungsvorrichtung zu dem externen Objekt anhand der empfangenen Echos vorgesehen, wobei sie einen Betriebszustand zum Berechnen der relativen Position der Sende- und Empfangseinheiten zueinander anhand eines zurückgeworfenen Echos aufweist.

Der Grundgedanke der offenbarten technischen Lösung besteht darin, dass es mit Hilfe der Echosignale nicht nur möglich ist, bei bekannter Entfernung der Sende-/Empfangseinheiten voneinander ihren Abstand von einem Hindernis zu messen, sondern dass mit Hilfe redundanter Messungen auch ihre Entfernung untereinander messbar ist. Die Messung der Entfernungen der Sende-/Empfangseinheiten untereinander wird auch als Kalibrierung bezeichnet. Es genügt daher, wenn beim Einbau der Echosignalüberwachungsvorrichtung vorgegebene Einbaupositionen nur näherungsweise eingehalten werden. Durch nachträgliches Messen der Abstände der Sende-/Empfangseinheiten voneinander und Anwenden der gemessenen Abstände bei der Auswertung von im Normalbetrieb gemessenen Echolaufzeiten ist dennoch eine exakte Bestimmung des Abstands zu einem Hindernis möglich. Hierbei erfolgt eine logische und räumliche Adressierung verwendeter Sensoren gegebenenfalls mittels so genannten Punkt-zu-Punkt-Verbindungen. Grundsätzlich wird bei jeder direkten Verbindung zwischen zwei Netzwerkteilnehmern eine Punkt-zu-Punkt-Verbindung verstanden.

Weiterhin sind aus der DE 10 2005 055 964 A1 und der EP-A-0 980 165 Verfahren bekannt, die die Zuweisung eindeutiger Bus-Adressen an Sensoren eines Kfz-Fahrerassistenzsystems gestatten. Dabei wird im Fall der DE 10 2005 055 964 A1 eine Laufzeitmessung eines Signals vorgenommen, während hingegen gemäß der EP-A-0 980 165 eine Adresszuweisung entsprechend der Leitungslänge des Busses zwischen einem Master und einem Knoten erfolgt. Eine ähnliche Vorgehensweise ist auch der DE 10 2005 054 390 A1 und der EP-A-1 455 278 zu entnehmen.

Darüber hinaus ist aus der EP-A-1 058 126 und aus der DE 101 64 760 B4 die Nutzung von Übersprechsignalen zum Test einer möglichen Sensorerblindung bzw. Sensorverschmutzung bekannt. Aus der DE 43 38 743 A1 ist darüber hinaus ein Verfahren bekannt, bei dem Übersprechsignale zu einer Temperaturmessung herangezogen werden.

### Offenbarung der Erfindung

Das erfindungsgemäße Fahrerassistenzsystem eines Fahrzeugs mit den im Anspruch 1 genannten Merkmalen bietet demgegenüber den Vorteil, dass ein Sensorbus mit baugleichen Sensoren realisiert werden kann, die sich lediglich in einer eindeutigen Adresse unterscheiden. Dabei muss nicht bekannt sein, welche eindeutige Adresse die im Sensorbus verbauten Sensoren aufweisen, um eine eindeutige logische und räumliche Adressierung derselben im System zu ermöglichen. Wesentlich ist hierbei, dass eine Aussendung eines Sensorsignals zur Generierung eines Signalechos derart stattfindet, dass eine Zuordnung einer vorbekannten logischen Adresse eines der Sensoren zu einer vordefinierten exakten Position desselben durch Auswertung des empfangenen Signalechos erfolgt. Letztlich ergibt sich durch die Realisierung des Sensorbusses eine Einsparung von Leitungen im Kabelbaum des Fahrzeugs, wobei baugleiche Sensoren, die lediglich durch eine eindeutige interne Adresse gekennzeichnet sind beziehungsweise die eine unterschiedliche Seriennummer aufweisen, Verwendung finden. Auch eine automatische Positionszuordnung der Busteilnehmer, insbesondere Sensoren, sowohl bei einer ersten Inbetriebnahme als auch im Reparaturfall ist ohne spezielle Messaufbauten möglich. Der Sensorbus kommt dabei ohne aufwändige Punkt-zu-Punkt-Verbindungen, insbesondere ohne eine so genannte Daisy-Chain, aus.

Als Daisy-Chain wird eine Anzahl von seriell in einem Bussystem miteinander verbundener Hardware-Komponenten bezeichnet. Dabei ist die erste Komponente direkt mit einer Verarbeitungseinheit, insbesondere einem Steuergerät, verbunden. Die weiteren Komponenten sind jeweils mit ihren Vorgängern im Sinne des Reihenschaltungsprinzips verbunden, so dass eine Komponentenkette entsteht. Ein Signal zu und von einer Komponente verläuft nun über seine Vorgänger bis hin zur Verarbeitungseinheit. Wesentlich bei einer derartigen Verschaltung der Komponenten ist die Möglichkeit, Prioritäten vergeben zu können. Somit kann festgelegt werden, dass Informationen beispielsweise nur dann übermittelt werden können, wenn die Leitung frei ist oder dass einige Komponenten unbedingten Vorrang gegenüber anderen Komponenten haben, wodurch sich Konflikte und Fehlfunktionen verhindern lassen.

Gleiches gilt in analoger Weise für das Verfahren zum Betrieb eines Fahrerassistenzsystem mit den Merkmalen des Anspruchs 6.

Vorteilhafte Weiterbildungen ergeben sich durch die Merkmale der abhängigen Ansprüche.

In einer vorteilhaften Ausgestaltung der Erfindung ist es vorgesehen, dass das Signalecho ein Übersprechecho, ein Direktecho und/oder ein Kreuzecho ist, wodurch je nach Situation und Einsatzzweck unterschiedliche Echos nutzbar gemacht werden können. Unter dem Übersprechecho wird ein Signal verstanden, dass beispielsweise dann entsteht, wenn ein von einem Sensor emittiertes Signal, insbesondere Ultraschall-Signal, sich auch entlang der Oberfläche einer Sensorbaugruppe ausbreitet, so dass bei benachbarten Sensoren besagte Echos auftreten. Das Direktecho beschreibt eine Sende- und Empfangssituation, bei der das von einem Sensor gesendete Signal auf Grund einer Reflexion zu eben diesem Sensor unmittelbar zurückgeworfen wird. Bei dem Kreuzecho handelt es sich dagegen um eine Signalreflexion, die nicht bei dem Sendesensor, sondern bei einem benachbarten Sensor empfangen wird.

In einer weiteren vorteilhaften Ausgestaltung der Erfindung ist es vorgesehen, dass zusätzlich zu dem wenigstens einen Signalecho zumindest ein Fahrzeugsignal nutzbar ist. Diese Signalkombination spielt insbesondere bei einer symmetrischen Sensoranordnung eine Rolle, da hierbei keine eindeutige Positionszuordnung der verbauten Sensoren möglich ist. Dabei kann lediglich eine gegebene Reihenfolge der Positionen beziehungsweise der Nachbarschaftsbeziehungen der Sensoren bestimmt werden. Anhand einer Auswertung zusätzlicher Fahrzeugsignale kann eine Adressvertauschung der Sensoren auf Grund ihrer symmetrischen Anordnung vermieden werden.

Gemäß einer bevorzugten Ausgestaltung der Erfindung ist es vorgesehen, dass jeder einzelne Sensor als Sender oder als Empfänger konfigurierbar ist, wodurch unterschiedliche Einbausituationen der Sensoren berücksichtigt werden und verschiedene Konfigurierungsvarianten zum Einsatz kommen können.

Gemäß einer weiteren bevorzugten Ausgestaltung der Erfindung ist es vorgesehen, dass jeder einzelne Sensor als Sender und Empfänger konfigurierbar ist, so dass auch Direktechos bei der Sensoradressierung berücksichtigt werden können.

Die Vorteile der abhängigen Systemansprüche 2 bis 5 gelten in analoger Weise auch für die Merkmale der abhängigen Verfahrensansprüche.

### Kurze Beschreibung der Zeichnungen

Die Erfindung sowie vorteilhafte Ausgestaltungen gemäß den Merkmalen der weiteren Ansprüche werden im Folgenden anhand der in den Zeichnungen dargestellten Ausführungsbeispiele näher erläutert, ohne dass insoweit eine Beschränkung der Erfindung erfolgt; diese umfasst vielmehr alle Abwandlungen, Änderungen und Äquivalente, die im Rahmen der Ansprüche möglich sind. Es zeigen:
- Figur 1: ein Fahrzeug mit einem erfindungsgemäßen Fahrerassistenzsystem in einer schematischen Darstellung; und
- Figur 2: einen Fahrzeugabschnitt mit einer symmetrischen Sensoranordnung in einer ersten Sensorkonfiguration; und
- Figur 3: den Fahrzeugabschnitt nach Figur 2 mit der symmetrischen Sensoran- ordnung in einer weiteren Sensorkonfiguration; und
- Figur 4: den Fahrzeugabschnitt nach Figur 2 mit der symmetrischen Sensoran- ordnung in einer ein Hindernis berücksichtigenden Sensorkonfiguration; und
- Figur 5: den Fahrzeugabschnitt nach Figur 2 mit der symmetrischen Sensoran- ordnung in einer ein Hindernis berücksichtigenden weiteren Sensorkonfi- guration; und
- Figur 6: den Fahrzeugabschnitt nach Figur 2 mit der symmetrischen Sensoran- ordnung in einer ein Hindernis berücksichtigenden dritten Sensorkonfigu- ration; und
- Figur 7: einen Fahrzeugabschnitt mit Datenbus und Steuergerät sowie mit einer drei Sensoren umfassenden Sensoranordnung in einer ein Hindernis be- rücksichtigenden Sensorkonfiguration.

### Ausführungsform(en) der Erfindung

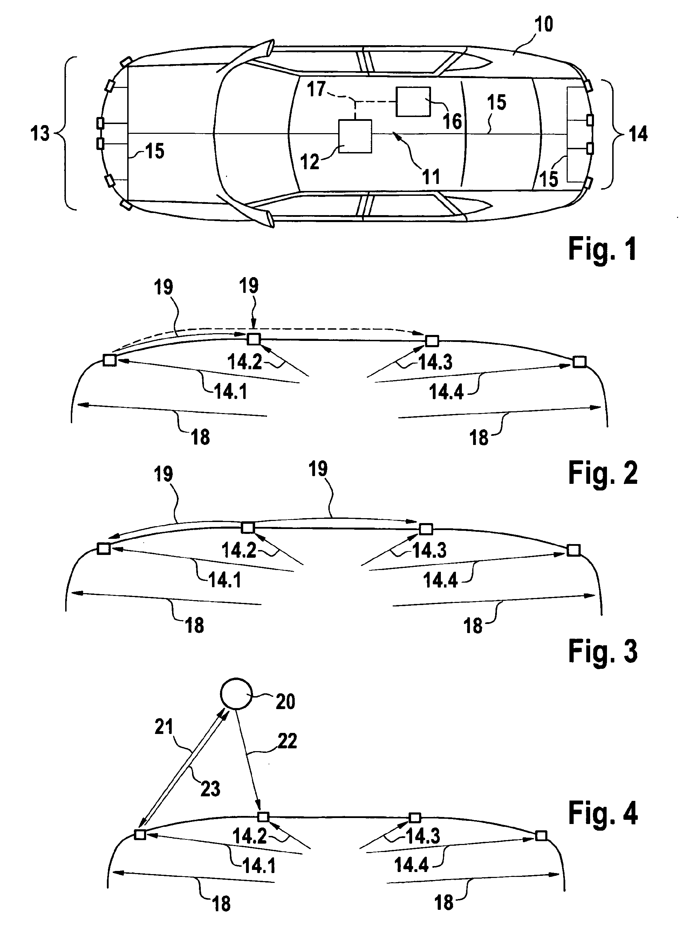

In Figur 1 ist ein Fahrzeug 10 mit einem Fahrerassistenzsystem 11 gezeigt. Das Fahrerassistenzsystem 11 wird unter anderem auch als Einparkassistent, als Einparkhilfe oder als Einparkhilfe-System bezeichnet. Wesentliche Bestandteile des Fahrerassistenzsystems 11 sind ein Steuergerät 12, insbesondere ein elektronisches Steuergerät, eine Serie Front-Sensoren 13 sowie eine weitere Serie Heck-Sensoren 14. Bei den Sensoren 13; 14 handelt es sich um so genannte Ultraschall-Sensoren. Die Sensoren 13; 14 stehen über einen oder mehrere Sensorbusse 15 mit dem Steuergerät 12 in einer Daten austauschenden Wirkverbindung, wobei das Steuergerät 12 eine Master-Funktion und die Sensoren 13; 14 eine Slave-Funktion übernehmen. Das Steuergerät ist zudem mit einer zentralen Rechnereinheit 16 und/oder auch mit einem weiteren Steuergerät über einen Feldbus 17 gekoppelt. Als Feldbus 17 kann zum Beispiel der so genannte CAN-Bus (Controller Area Network) eingesetzt werden, über den Fahrzeugsignale zu dem Steuergerät 12 gelangen. Es handelt sich dabei um ein asynchrones, serielles Bussystem, das für die Vernetzung von Steuergeräten in Automobilen dient, um die Länge von einzusetzenden Kabelbäumen zu reduzieren, so dass Material und Gewicht eingespart werden können.

Der Datenbus 15 kann beispielsweise auch als ein LIN-Bus (Local Interconnect Network) ausgeführt sein. Das Local Interconnect Network dient einer kostengünstigen Kommunikation zwischen intelligenten Sensoren und Aktuatoren in Kraftfahrzeugen. Auch ist die Verwendung des so genannten PSI (Peripheral Sensor Interface) möglich, welches eine 10-Bit-Kommunikations-Schnittstelle bereitstellt. An dieser Schnittstelle lassen sich mehrere Sensorkanäle über eine Zweidrahtleitung anschließen. Dies erlaubt eine freiere Systemauslegung bei gleichzeitig verringerten Kosten. Über die PSI-Schnittstelle werden sowohl Sensordaten als auch Informationen wie Sensor-Status, Sensor-Typ, Sensor-Messbereich und die jeweilige elektronische Seriennummer sicher übertragen.

In Figur 2 ist ein Teilbereich des Fahrerassistenzsystems 11 gezeigt, welcher beispielhaft die in einem Stoßfänger 18 des Fahrzeugs 10 angeordnete Heck-Sensoren 14 aufweist. Bei bekannter logischer Adresse der Sensoren 14 werden während einer Initialisierungsphase die Sensoren 14 in einem speziellen Messmodus von dem Steuergerät 12 angesteuert. Hierbei wird nacheinander jeder Sensor einzeln von dem Steuergerät 12 zum Senden von Ultraschallimpulsen 23 aufgefordert. Alle anderen Sensoren werden zeitgleich in einen reinen Empfangsbetrieb versetzt. Dabei ist in einer Draufsicht ein erster Heck-Sensor 14.1 an einem linken äußeren Rand des Stoßfängers 18 angeordnet. Beabstandet zu dem ersten Heck-Sensor 14.1 befindet sich ein zweiter Heck-Sensor 14.2, gefolgt von einem dritten Heck-Sensor 14.3, welcher mit einem Abstand zu einem vierten Heck-Sensor 14.4 an einem rechten äußeren Rand des Stoßfängers 18 positioniert ist. Der von dem als Sender konfigurierten ersten Heck-Sensor 14.1 emittierte Ultraschall breitet sich auch entlang der Oberfläche des Stoßfängers 18 aus, so dass es bei dem benachbarten Sensor 14.2 und optional auch an dem weiteren Sensor 14.3 zu so genannten Übersprechechos 19 kommt. Die Übersprechechos 19 werden von den als Empfänger konfigurierten Heck-Sensoren 14.2 bis 14.3 detektiert und an das Steuergerät 12 zurückgemeldet. Sobald alle Sensoren 14 einmal gesendet haben und alle entsprechenden Übersprechechos 19 an das Steuergerät 12 übertragen wurden, kann durch die aufgetretenen unterschiedlichen Laufzeiten der Übersprechechos 19 bei bekannten möglichen Positionen der Sensoren 14 in dem Stoßfänger 18 eine exakte räumliche Position beziehungsweise eine geographische Adresse der Sensoren 14 bestimmt werden, selbst wenn also die Einbaupositionen der Sensoren bekannt sind, kann dann festgestellt werden, an welcher Einbauposition ein Sensor mit einer jeweiligen Adresse verbaut worden ist. Gemäß Figur 3 ist der zweite Sensor 14.2 als Sender konfiguriert, während die beiden benachbarten Sensoren 14.1 und 14.3 als Empfänger dienen.

Bei einer symmetrischen Anordnung der Sensoren 14 in dem Stoßfänger 18 ist keine eindeutige geographische Zuordnung möglich. Es kann lediglich die Reihenfolge der Positionen beziehungsweise die jeweilige Nachbarschaftsbeziehung der Sensoren 14 untereinander bestimmt werden. Allerdings kann es auf Grund der symmetrischen Anordnung der Sensoren 14 zu einer Links-Rechts-Vertauschung kommen, da die Übersprechechos 19 des Sensors 14.1 denen des Sensors 14.4 entsprechen beziehungsweise die Übersprechechos 19 des Sensors 14.2 denen des Sensors 14.3 entsprechen. Diese Zuordnungsproblematik kann jedoch über eine Auswertung von Fahrzeugsignalen, wie beispielsweise Lenkwinkel, Radimpulse und dergleichen, in dynamischen Hindernissituationen gelöst werden.

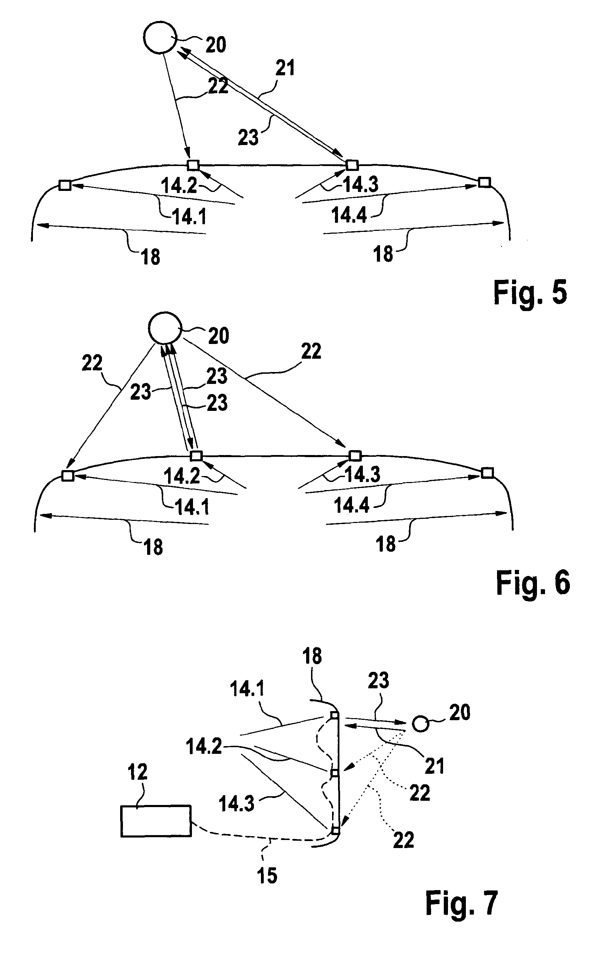

In den Figuren 4 und 5 ist jeweils ein den Figuren 2 und 3 entsprechender Sensorenaufbau gegeben, wobei das Steuergerät 12 bei bekannten logischen Adressen der Sensoren 14 diese nacheinander zur Messung auffordern kann. Der Messprozess umfasst das Aussenden der Ultraschallimpulse 23 und eine daran anschließende Messung der Signallaufzeit, bis das an einem Hindernis 20 reflektierte Echo, insbesondere Direktecho 21 und/oder Kreuzecho 22, bei dem jeweiligen Sender respektive Empfänger wieder eintrifft. Dabei werden gleichzeitig alle nicht sendenden Sensoren 14 in Empfangsbereitschaft versetzt. Gemäß Figur 4 ist der erste Sensor 14.1 und gemäß Figur 5 der dritte Sensor 14.3 als Sender konfiguriert. Pro Sendezyklus melden alle Sensoren die empfangenen Echozeitpunkte beziehungsweise die äquivalenten Entfernungen an das Steuergerät 12 zurück. Die Wiederholrate der Messungen ist dabei so groß, dass sich das Hindernis 20 zwischen zwei aufeinander folgenden Messungen eines einzelnen Sensors 14 nur minimal bewegt. Letztlich kann somit die geographische Adresse der Sensoren 14 durch eine Analyse der an dem Hindernis 20 reflektierten Echos durchgeführt werden.

Gemäß Figur 6 ist ein Ausschnitt einer möglichen Messreihenfolge für ein 4-SensorSystem gezeigt, bei dem der zweite Sensor 14.2 als Sender konfiguriert ist. Anhand der von den Sensoren 14 nacheinander an das Steuergerät 12 zurückgesendeten Abstandsinformationen und deren zeitlichem Verlauf ist es möglich, die Positionen der Sensoren 14 in dem Stoßfänger 18 zu bestimmen und hierüber die geographische Adresse. Die Koordinaten der möglichen Sensorpositionen in dem Stoßfänger 18 müssen bekannt sein, um mit Hilfe der empfangenen Echos, insbesondere Direktecho 21 und/oder Kreuzecho 22, den einzelnen Sensoren 14 Positionen in dem Stoßfänger 18 zuzuordnen.

Auch bei dem hier beschriebenen Verfahren ist bei symmetrischer Anordnung der Sensoren 14 in dem Stoßfänger 18 keine eindeutige geographische Zuordnung möglich. Es kann lediglich die Reihenfolge der Positionen beziehungsweise der Nachbarschaftsbeziehung der Sensoren 14 zueinander bestimmt werden. Allerdings kann es auf Grund der Symmetrie zu einer Links-Rechts-Vertauschung kommen. Wenn zusätzlich zu den Entfernungsinformationen Fahrzeugsignale ausgewertet werden, ist auch eine eindeutige Seitenzuordnung möglich. Auf der Basis der Fahrzeugsignale, zum Beispiel Lenkwinkel, Radimpulse oder dergleichen, wird die Bewegung des Fahrzeugs ermittelt und mit den gemessenen Entfernungsinformationen und deren Verlauf abgeglichen. Wenn sich zum Beispiel das Hindernis 20, insbesondere rundes Hindernis, genau vor dem zweiten Sensor 14.2 befindet und sich das Fahrzeug mit einem Lenkeinschlag nach links auf das Hindernis 20 bewegt, ist die kürzeste gemessene Entfernung zunächst das Direktecho 21 des zweiten Sensors 14.2. Der Lenkeinschlag nach links bewirkt, dass sich das Hindernis 20 immer mehr dem zweiten Sensor 14.2 nähert. Durch eine Analyse des zeitlichen Verlaufs der Echos 21, 22 und einer Korrelation mit den Fahrzeugdaten respektive Fahrzeugsignalen ist es möglich, eine eindeutige Seitenzuordnung der Sensoren 14 vorzunehmen.

In der Figur 7 ist in einer schematischen Darstellung eine weitere Ausführung des Datenbus gestützten Einparkhilfesystems 11 gezeigt, das zum Ermitteln der Sensor-Positionskonfiguration dient. Das Einparkhilfesystem arbeitet beispielsweise auf der Basis der Ultraschall-Sensoren 14.1 bis 14.3. Dabei wird mittels einer Schall-Laufzeitmessung der Abstand eines Objektes, insbesondere Hindernis 20, zu den Ultraschall-Sensoren 14 ermittelt. In Abhängigkeit des ermittelten Abstandes wird dann an einen Fahrer des Fahrzeugs 10 nach Figur 1 eine Abstandswarnung, insbesondere akustisch und/oder optisch oder dergleichen, ausgegeben. Bei einfachen Systemen wird in der Regel nur das Direktecho 21 zwischen den Sensoren 14 und dem Hindernis 20 ausgewertet. Dabei wird nur der Sensor, der den Ultraschallimpuls 23 gesendet hat, auch als Empfänger geschaltet. Die anderen Sensoren 14 bleiben in diesem Zusammenhang unberücksichtigt. Bei komplexeren Systemen werden auch die Kreuzechos 22 ausgewertet. Dabei werden auch die anderen Sensoren 14 als Empfänger geschaltet, wodurch ein Teil des am Hindernis 20 reflektierten Ultraschalls auch von eben diesen anderen Sensoren 14 detektiert wird. Dadurch lässt sich zum Beispiel sehr schnell anhand eines Vergleichs der Laufzeit der Direktechos 21 und der Kreuzechos 22 ermitteln, ob sich ein stabförmiges Hindernis zwischen zwei Ultraschall-Sensoren oder direkt vor einem der Ultraschall-Sensoren 14 befindet. Darauf aufbauend wird eine wirkliche und tatsächliche Distanz zu dem Stoßfänger 18 berechnet und als Warndistanz verwendet.

Auch hierbei sind alle Sensoren 14 an das zentrale Steuergerät 12 angeschlossen, wobei das Bussystem 15 für eine Kommunikation zwischen dem Steuergerät 12 und dem jeweiligen Sensor 14 dient. Das Bussystem 15 kann auch nach diesem Ausführungsbeispiel als CAN oder als LIN ausgeführt werden. Dabei ist im günstigsten Fall lediglich ein Signal-Pin an dem Steuergerät 12 vorzusehen, sofern die Sensoren 14.1, 14.2, 14.3 sequenziell an den Bus 15 angeschlossen werden. Zudem reduziert sich gegenüber einer herkömmlichen Verdrahtung die Länge einzusetzender Kabel, da nur noch einmal der Abstand von circa 5 m zwischen dem Steuergerät 12 und den Sensoren 14 und noch die Abstände von jeweils circa 1,5 m zwischen den Sensoren 14 zu überbrücken sind. Wesentliche Voraussetzung ist hierbei, dass dem Steuergerät 12 bekannt ist, wo sich jeder einzelne Sensor 14 an dem Stoßfänger 18 befindet, damit die Auswertung der Kreuzechos 22 korrekt funktioniert.

Das System 11 kann hierbei insofern kalibriert werden, als dass nach einer Montage der Sensoren 14 ein geeignetes Hindernis 20 vor den Sensoren 14 platziert und bewegt wird. Das System 11 misst die Direktecho basierten und die Kreuzecho basierten Abstände zwischen den Sensoren 14 und dem Hindernis 20. Durch einen Vergleich der Abstandswerte wird von dem Steuergerät 12 die plausibelste Sensorenanordnung bestimmt, die zu den erfassten Abstandswerten führt. Das System 11 legt diese Konfiguration in einem Speicher, insbesondere EEPROM, Flash, gepufferter RAM, etc., zum Beispiel in dem Steuergerät 12 oder in den Sensoren 14 ab. Die Kalibrierungsinformation wird im Folgenden zur Berechnung der Warndistanz herangezogen, so dass es letztlich möglich wird, die Ultraschall-Sensoren 14 wahlfrei und ohne Beeinträchtigung des Gesamtsystems verbauen zu können.

Das System 11 kann dabei so ausgelegt werden, dass eine Minimalfunktion dann gegeben ist, wenn zum Beispiel vor der Durchführung der Kalibrierung, das heißt wenn noch keine Kalibrierwerte vorliegen oder ein Sensortausch erkannt wurde oder dergleichen, nur die Direktechos 21 verwendet werden. Es ist weiterhin möglich, dass das System 11 die Kalibrierung selbständig sporadisch oder regelmäßig überprüft und gegebenenfalls bei einem Einparkvorgang oder dergleichen erneuert. Das System 11 kann dabei so gestaltet werden, dass im Falle einer nicht eindeutig bestimmbaren Reihenfolge der Sensoren 14, die Bewegung des Hindernisses 20 mit ausgewertet wird. Ferner kann das System 11 derart ausgeführt werden, dass bei einer nicht eindeutig bestimmbaren Reihenfolge der Sensoren 14, Teillösungen ermittelt werden. Dies ist dann der Fall, wenn nur ermittelt werden kann, dass der erste Sensor 14.1 und der zweite Sensor 14.2 Nachbarn sind, aber die Nachbarschaftsbeziehung zwischen dem dritten Sensor 14.3 und den beiden erstgenannten Sensoren 14.1, 14.2 noch unbekannt ist. Solche Teillösungen können bereits zur Nutzung des Kreuzechos 22 für die bekannten Beziehungen herangezogen werden. Die Teillösungen können zudem schrittweise zu einer Gesamtlösung ergänzt werden, wenn zum Beispiel während eines Einparkvorgangs eine Nachbarschaftsbeziehung zwischen dem ersten Sensors 14.1 und dem zweiten Sensor 14.2 und während eines anderen Einparkvorgangs eine Nachbarschaftsbeziehung zwischen dem zweiten Sensor 14.2 und dem dritten Sensor 14.3 ermittelt wurden.

Gemäß Figur 7 sendet der erste Sensor 14.1 einen Ultraschall-Puls, woraufhin drei Distanzen, nämlich das Direktecho 21 und die beiden Kreuzechos 22.1, 22.2, gemessen werden. Das Steuergerät 12 erkennt hierbei, dass das Direktecho 21 kleiner ist als das zweite Kreuzecho 22.2, und dass das erste Kreuzecho 22.1 kleiner ist als das zweite Kreuzecho 22.2. Daraus folgt, dass der erste Sensor 14.1 und der zweite Sensor 14.2 Nachbarn sind. Das Steuergerät 12 erkennt weiterhin, dass das Direktecho 21 kleiner ist als das erste Kreuzecho 22.1, und dass das erste Kreuzecho 22.1 kleiner ist als das zweite Kreuzecho 22.2. Daraus folgt, dass der erste Sensor 14.1 weiter von dem dritten Sensor 14.3 entfernt ist als der zweite Sensor 14.2 von dem dritten Sensor 14.3. Letztlich wird daraus abgeleitet, dass die Sensoren 14 in der Reihenfolge erster Sensor 14.1, zweiter Sensor 14.2 und dritter Sensor 14.3 benachbart sind. Das vorliegende System 11 zeichnet sich dabei durch eine einfache Umsetzbarkeit aus und verringert die Auswirkungen von Montagefehlern. Ferner ist das System 11 bei Nachrüstungen anwendbar. Es ist weder eine Positionskodierung der Sensoren 14 im Werk erforderlich noch sind positionsdedizierte Sensorvarianten nötig.

Zusammenfassend wird ein Fahrerassistenzsystem mit einem Steuergerät eines Fahrzeugs vorgeschlagen, das über einen Daten-Bus mit einer Anzahl an dem Fahrzeug angeordneten Ultraschall-Sensoren in einer Daten austauschenden Wirkverbindung steht, wobei eine Aussendung eines Sensorsignals zur Generierung eines Signalechos derart stattfindet, dass eine Zuordnung einer vorbekannten logischen Adresse eines der Sensoren zu einer vordefinierten exakten Position desselben erfolgt. Hierbei wird bei bekannten logischen Adressen der verbauten Sensoren ermittelt, an welcher Position in dem Stoßfänger der jeweilige Sensor verbaut ist. Voraussetzung hierfür ist, dass die Sensoren nur an bestimmten bekannten Positionen in dem Stoßfänger verbaut werden können. Die genaue Kenntnis darüber, welcher Sensor an welcher Position in dem Stoßfänger verbaut wurde, ist für das System essentiell, da die Sensoren individuell von dem Steuergerät angesteuert und die Informationen der Sensoren, zum Beispiel empfangene Echos, eindeutig einer geographischen Position in dem Stoßfänger zugeordnet werden müssen, um beispielsweise eine genaue Abstandsberechnung durchführen oder eine Datenanzeige, insbesondere Display mit lateraler Auflösung, ansteuern zu können. Hierbei ist es bei dem geschaffenen Sensorbus-System nicht notwendig, zusätzliche Komponenten oder eine Modifikation der Komponenten, beispielsweise in Form eines Zusatz-Pins im Sensor bei einem Daisy-Chain-System, vorzusehen.

Weitere vorteilhafte Ausführungsformen der vorliegenden Erfindung sind Gegenstand der Patentansprüche.

## Patentansprüche

1. Fahrerassistenzsystem (11) eines Fahrzeugs (10) mit einem Steuergerät (12), das über einen Daten-Bus (15) mit einer Anzahl an dem Fahrzeug (10) angeordneten Sensoren (14) in einer Daten austauschenden Wirkverbindung steht, **dadurch gekennzeichnet, dass** eine Aussendung eines Sensorsignals (23) zur Generierung eines Signalechos (19, 21, 22) derart stattfindet, dass eine Zuordnung einer vorbekannten logischen Adresse jeweils eines der Sensoren (14) zu einer vordefinierten Position desselben erfolgt, wobei das Sensorsignal (23) ein Ultraschallsignal ist.

2. Fahrerassistenzsystem (11) nach Anspruch 1, **dadurch gekennzeichnet, dass** das Signalecho ein Übersprechecho (19) , das einem Übersprechen zwischen Sensoren entspricht, ein Direktecho und/oder (21) ein Kreuzecho (22) ist, wobei es sich bei dem Direkt-bzw. dem Kreuzecho jeweils um ein an einem Hindernis reflektiertes Echo handelt.

3. Fahrerassistenzsystem (11) nach einem der vorhergehenden Ansprüche, **dadurch gekennzeichnet, dass** zusätzlich zu dem wenigstens einen Signalecho (19, 21, 22) zumindest ein Fahrzeugsignal nutzbar ist.

4. Fahrerassistenzsystem (11) nach einem der vorhergehenden Ansprüche, **dadurch gekennzeichnet, dass** jeder einzelne Sensor (14) als Sender oder als Empfänger konfigurierbar ist.

5. Fahrerassistenzsystem (11) nach einem der vorhergehenden Ansprüche, **dadurch gekennzeichnet, dass** jeder einzelne Sensor (14) als Sender und Empfänger konfigurierbar ist.

6. Verfahren zum Betrieb eines Fahrerassistenzsystems (11) eines Fahrzeugs (10) mit einem Steuergerät (12), das über einen Daten-Bus (15) mit einer Anzahl an dem Fahrzeug (10) angeordneten Sensoren (14) in einer Daten austauschenden Wirkverbindung steht, **dadurch gekennzeichnet, dass** eine Aussendung eines Sensorsignals (23) zur Generierung eines Signalechos (19, 21, 22) derart stattfindet, dass eine Zuordnung einer vorbekannten logischen Adresse jeweils eines der Sensoren zu einer vordefinierten Position desselben erfolgt, wobei das Sensorsignal (23) ein Ultraschallsignal ist.

7. Verfahren nach Anspruch 6, **dadurch gekennzeichnet, dass** das Signalecho als Übersprechecho (19), welches einem Übersprechen zwischen Sensoren entspricht als Direktecho (21) und/oder als Kreuzecho (22) auftritt, wobei es sich bei dem Direkt echo bzw. dem Kreuzecho jeweils um ein an einem Hindernis reflektiertes Echo handelt.

8. Verfahren nach einem der Ansprüche 6 oder 7, **dadurch gekennzeichnet, dass** zusätzlich zu dem wenigstens einen Signalecho (19, 21, 22) zumindest ein Fahrzeugsignal genutzt wird.

9. Verfahren nach einem der Ansprüche 6 bis 8, **dadurch gekennzeichnet, dass** jeder einzelne Sensor (14) als Sender oder als Empfänger konfiguriert wird.

10. Verfahren nach einem der Ansprüche 6 bis 9, **dadurch gekennzeichnet, dass** jeder einzelne Sensor (14) als Sender und Empfänger konfiguriert wird.

## Claims

1. Driver assistance system (11) in a vehicle (10) having a controller (12) which is operatively connected to a number of sensors (14), arranged on the vehicle (10), by means of a data bus (15) so as to interchange data, **characterized in that** a sensor signal (23) is transmitted, for the purpose of generating a signal echo (19, 21, 22), such that a previously known logical address is associated with a respective one of the sensors (14) at a predefined position thereof, wherein the sensor signal (23) is an ultrasound signal.

2. Driver assistance system (11) according to Claim 1, **characterized in that** the signal echo is a crosstalk echo (19) which corresponds to crosstalk between sensors, a direct echo (21) and/or a cross echo (22), wherein the direct echo and the cross echo are each an echo reflected from a obstacle.

3. Driver assistance system (11) according to one of the preceding claims, **characterized in that** at least one vehicle signal can be used in addition to the at least one signal echo (19, 21, 22).

4. Driver assistance system (11) according to one of the preceding claims, **characterized in that** each individual sensor (14) can be configured as a transmitter or as a receiver.

5. Driver assistance system (11) according to one of the preceding claims, **characterized in that** each individual sensor (14) can be configured as a transmitter and a receiver.

6. Method for operating a driver assistance system (11) in a vehicle (10) having a controller (12) which is operatively connected to a number of sensors (14), arranged on the vehicle (10), by means of a data bus (15) so as to interchange data, **characterized in that** a sensor signal (23) is transmitted, for the purpose of generating a signal echo (19, 21, 22), such that a previously known logical address is associated with a respective one of the sensors at a predefined position thereof, wherein the sensor signal (23) is an ultrasound signal.

7. Method according to Claim 6, **characterized in that** the signal echo occurs as a crosstalk echo (19) which corresponds to crosstalk between sensors, as a direct echo (21) and/or as a cross echo (22), wherein the direct echo and the cross echo are each an echo which is reflected from an obstacle.

8. Method according to one of Claims 6 and 7, **characterized in that** at least one vehicle signal is used in addition to the at least one signal echo (19, 21, 22).

9. Method according to one of Claims 6 to 8, **characterized in that** each individual sensor (14) is configured as a transmitter or as a receiver.

10. Method according to one of Claims 6 to 9, **characterized in that** each individual sensor (14) is configured as a transmitter and a receiver.

## Revendications

1. Système d'aide à la conduite (11) d'un véhicule (10) avec un appareil de commande (12) qui se place dans une liaison active permettant l'échange de données avec un certain nombre de capteurs (14) disposés au niveau du véhicule (10) par le biais d'un bus de données (15), **caractérisé en ce que** l'envoi d'un signal de capteur (23) est destiné à provoquer un écho au signal (19, 21, 22) de façon à induire un appariement d'une adresse logique connue à l'avance d'un des capteurs (14) respectifs avec une position prédéfinie de celui-ci, le signal de capteur (23) étant un signal ultrason.

2. Système d'aide à la conduite (11) selon la revendication 1, **caractérisé en ce que** l'écho au signal est un écho diaphonique (19) qui correspond à une diaphonie entre capteurs, un écho direct (21) et/ou un écho croisé (22), l'écho direct et/ou l'écho croisé étant respectivement un écho réfléchi contre un obstacle.

3. Système d'aide à la conduite (11) selon l'une quelconque des revendications précédentes, **caractérisé en ce qu'**au moins un signal du véhicule peut être utilisé en plus de l'au moins un écho au signal (19, 21, 22).

4. Système d'aide à la conduite (11) selon l'une quelconque des revendications précédentes, **caractérisé en ce que** chaque capteur (14) individuel peut être configuré comme un émetteur ou un récepteur.

5. Système d'aide à la conduite (11) selon l'une quelconque des revendications précédentes, **caractérisé en ce que** chaque capteur (14) individuel peut être configuré comme un émetteur et un récepteur.

6. Procédé d'utilisation d'un système d'aide à la conduite (11) d'un véhicule (10) avec un appareil de commande (12) qui se place dans une liaison active permettant l'échange de données avec un certain nombre de capteurs (14) disposés au niveau du véhicule (10) par le biais d'un bus de données (15), **caractérisé en ce que** l'envoi d'un signal de capteur (23) est destiné à provoquer un écho au signal (19, 21, 22) de façon à induire un appariement d'une adresse logique connue à l'avance d'un des capteurs respectifs avec une position prédéfinie de celui-ci, le signal de capteur (23) étant un signal ultrason.

7. Procédé selon la revendication 6, **caractérisé en ce que** l'écho au signal prend la forme d'un écho diaphonique (19) qui correspond à une diaphonie entre capteurs, d'un écho direct (21) et/ou d'un écho croisé (22), l'écho direct et/ou l'écho croisé étant respectivement un écho réfléchi contre un obstacle.

8. Procédé selon l'une quelconque des revendications 6 ou 7, **caractérisé en ce qu'**au moins un signal du véhicule est utilisé en plus de l'au moins un écho au signal (19, 21, 22).

9. Procédé selon l'une quelconque des revendications 6 à 8, **caractérisé en ce que** chaque
capteur (14) individuel est configuré comme un émetteur ou un récepteur.

10. Procédé selon l'une quelconque des revendications 6 à 9, **caractérisé en ce que** chaque capteur (14) individuel est configuré comme un émetteur et un récepteur.
